# EUROPÄISCHE PATENTSCHRIFT

(11) **EP 0 761 847 B1**
(45) Veröffentlichungstag und Bekanntmachung des Hinweises auf die Patenterteilung: **17.10.2001**
(21) Anmeldenummer: 96110963.4
(22) Anmeldetag: 08.07.1996
(51) Int. Cl.: D01F 6/84, D01F 1/10, C08L 67/02, D21F 1/00, C08J 5/04

(54) **Papiermaschinensiebe, Filter und Verstärkungseinlagen für Elastomere enthaltend Monofile aus Copolyestern**
Paper-making machine fabrics, filters and reinforcement structures for elastomers containing monofilaments from copolyesters
Toiles pour machine à papier, filtres et structures de renforcement pour élastomères contenant des monofilaments de copolyesters

(30) Priorität: 17.07.1995 DE 19525629
(43) Veröffentlichungstag der Anmeldung: 12.03.1997
(73) Patentinhaber: Teijin Monofilament Germany GmbH, 86399 Bobingen (DE)
(72) Erfinder: Thielemann, Ralph, Dr., 65830 Kriftel (DE); Klein, Peter, Dr., 65205 Wiesbaden (DE); Delker, Rex, Dr., 86517 Wehringen (DE); Wagner, Hans, Dr., 86399 Bobingen (DE)
(74) Vertreter: Luderschmidt, Schüler & Partner GbR

(56) Entgegenhaltungen:
- WO-A-96/38504
- DE-C- 4 307 394
- US-A- 5 607 757

## Beschreibung

Die vorliegende Erfindung betrifft den Einsatz von ausgewählten Copolyestern enthaltend Naphthalindicarbonsäure-Einheiten zur Herstellung von Papiermaschinensieben, Filtern und Verstärkungseinlagen für Elastomere. Die zum Einsatz gelangenden Copolyester eignen sich vorzugsweise für technische Anwendungen und weisen hohe Dimensionsstabilität sowie sehr gute Wärme-, Chemikalien- und Hydrolysebeständigkeit auf.

Monofilamente für technische Anwendungen sind in den meisten Fällen im Gebrauch hohen mechanischen Belastungen unterworfen. Hinzu kommen in vielen Fällen thermische Belastungen und Belastungen durch chemische und andere Umgebungseinflüsse, denen das Material einen ausreichenden Widerstand entgegensetzen muß. Bei all diesen Belastungen muß das Material eine gute Dimensionsstabilität und Konstanz der Kraft-Dehnungseigenschaften über möglichst lange Benutzungszeiträume aufweisen.

Ein Beispiel für technische Anwendungen, bei denen die Kombination hoher mechanischer, thermischer und chemischer Beanspruchungen vorliegt, ist der Einsatz von Monofilamenten in Papermaschinensieben, insbesondere im Langsieb, der Preßpartie und der Trockenpartie. Dieser Einsatz verlangt ein Monofilamentmaterial mit hohem Anfangsmodul und hoher Reißfestigkeit, einer guten Knoten- und Schlingenfestigkeit, hoher Abriebfestigkeit und einer hohen Hydrolyseresistenz um den hohen Beanspruchungen bei der Herstellung des Papiers zu widerstehen, und eine ausreichende Standzeit des Siebs zu gewährleisten.

Gegenwärtig werden Papiermaschinensiebe vorwiegend aus Polyethylenterephthalat-Monofilamenten in der Kette und einer Kombination von Polyethylenterephthalat- und Polyamid-6, oder Polyamid-6,6-Monofilamenten im Schuß hergestellt.

Diese Siebe können den Nachteil haben, daß sie sich im Laufe des Sieblebens auf der Papiermaschine in Laufrichtung längen (verlängern) und daher ein Nachspannen stattfinden muß.

Es hat seither nicht an Versuchen gefehlt, synthetische Monofilamentmaterialien herzustellen, die sich für dauerhafte Papiermaschinensiebe eignen. Die Anforderungen, die an diese technischen Produkte gestellt werden, sind jedoch so vielfältig, daß bisher auf diesem Gebiet nur Teillösungen erreicht werden konnten. Als eine Alternative zu Polyethylenterephthalat beschreibt U.S. Patent Nr. 5,169,499 den Einsatz von Copolymeren auf der Basis von 1,4-Dimethylolcyclohexan, Terephthalsäure und Isophthalsäure. Diese Polymere besitzen zwar eine gute Hydrolysestabilität, zeigen aber vergleichsweise schlechte Längs-, Knoten- und Schlingenfestigkeiten.

Alternative Materialien, wie Polyphenylensulfide, zeigen ebenfalls eine gute Hydrolysebeständigkeit, sind aber in der Herstellung sehr teuer und besitzen darüber hinaus nur einen niedrigen Anfangsmodul.

Es ist auch bekannt, Polyesterfasern mit sehr unterschiedlichen mechanischen und textiltechnischen Eigenschaften herzustellen. Insbesondere ist es möglich, durch Variation der Spinn-, Verstreck- und Relaxationsbedingungen aus Polyethylenterephthalat Monofilamente herzustellen, die ein breites Spektrum der für technische Monofilamente relevanten Eigenschaften abdecken. Die Bemühungen, ein Monofilamentmaterial zu erhalten, das gleichzeitig die für Papiermaschinensiebe erforderliche hohe Dimensionsstabilität, Abriebfestigkeit, Chemikalien- und Hydrolysebeständigkeit aufweist, ist jedoch bisher nur in unzureichendem Maße gelungen.

In dem Bestreben, eine für möglichst viele technische Anwendungen geeignete Polyesterfaser zu finden, hat es auch nicht an Versuchen gefehlt, Polyethylenterephtalat durch andere Polyesterbausteine und durch Copolyester zu ersetzen.

Als alternative Polyester sind beispielsweise Polyethylennaphthalat und Copolyester aus 4,4'-Biphenyldicarbonsäure und 2,6-Naphthalindicarbonsäure bereits untersucht worden, wie sie z.B. in der EP-A-202,631, in der JP-A-73-96,830 und in der US-A-5,405,685 beschrieben wurden. Ferner wurden Fasern aus 4,4'Biphenyldicarbonsäure und 2,6-Naphthalindicarbonsäure in der WO-A-93/02122 vorgeschlagen. Diese von Polyestern auf der Basis von 2,6-Naphthalindicarbonsäure abgeleiteten Fasern weisen üblicherweise eine hohe Längsfestigkeit und einen hohen Modul auf, wenn sie mit einem hohen Spinnverzug ohne eine weitere Nachverstreckung ersponnen werden. Die Anwendbarkeit der vorbekannten Materialien für die Produktion von Monofilamenten, insbesondere zur Herstellung von Papiermaschinensieben, erscheint allerdings problematisch, da ein hoher Modul erfahrungsgemäß in aller Regel mit einer niedrigen Knoten- und Schlingenfestigkeit einhergeht.

Außerdem ist es bekannt, daß Polymere mit 4,4'-Biphenyldicarbonsäure rasch kristallisieren. Aus diesem Grund erscheint die Herstellbarkeit von Monofilamenten unter Einsatz dieses Rohstoffes problematisch, da eine zu rasche Kristallisation zu einer frühen Versprödung der Monofilamente noch während des Herstellungsprozesses führt, mit der Folge, daß die Monofilamente noch vor dem Erreichen einer genügenden Orientierung abreißen.

In der nicht vorveröffentlichten älteren Anmeldung WO 96/38504 werden Polyester auf der Basis von 2,6 Naphtalindicarboxylsäure beschrieben, die eine verbesserte hydrolytische Stabilität aufweisen. Die dort beschriebenen Polyester sind zum größten Teil Homopolyester, welche jedoch auch durch modifizieren mittels Dicarbonsäuren oder Glykolen einen niedrigeren Schmelzpunkt erhalten können. Papiermaschinensiebe, Filter und Einlagen zur Verstärkung von Elastomeren werden dort nicht offenbart. Auch fehlen dort Hinweise auf Monofilamente mit den Eigenschaften, welche mit der vorliegenden Erfindung erreicht werden.

Aus der JP-A-41-914 sind Monofilamente aus Poly-(ethylen-2,6-naphthalat) bekannt, die sich zur Herstellung von Siebdruckgeweben eignen. Diese Polymeren können mit bis zu 15 Mol % Terephthalsäure- oder Isophthalsäurebausteinen modifiziert sein.

Es wurde nun gefunden, daß sich Monofilamente aus ausgewählten Copolyestern zu Monofilamenten verarbeiten lassen, die sich durch hohen Modul und verbesserte Knoten- und Schlingenfestigkeit auszeichnen und die eine besonders gute Chemikalien- und Hydrolysebeständigkeit, inbesondere in heißfeuchten Umgebungen, aufweisen. Diese Copolymeren gestatten die Herstellung von Monofilen mit hohem Modul, die sehr hoch mechanisch belastet werden können.

Gegenstand der vorliegenden Erfindung sind Papiermaschinensiebe, Filter und Einlagen zur Verstärkung von Elastomeren wie sie in den diesbezüglichen unabhängigen Ansprüchen beschrieben werden. Besondere vorteilhafte Ausführungsformen finden sich in den entsprechenden rückbezogenen Unteransprüchen.

Bei den Copolymeren, aus denen die Monofilamente bestehen, handelt es sich erfindungsgem um Copolymere, die 85 bis 99 Mol % der wiederkehrenden Struktureinheit der Formel I 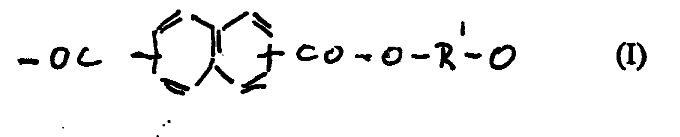 und 1 bis 15 Mol % der wiederkehrenden Struktureinheit der Formel II enthalten

-OC-R²-CO-O-R³-O- (II),

worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet,

R³ eine der für R¹ definierten Bedeutungen annimmt, und die Mengenangaben auf die Gesamtmenge des Polymeren bezogen sind, und das Copolymer eine intrinsische Viskosiktät, gemessen in einer Lösung des Copolyesters in Dichloressigsäure bei 25°C, von 0,5 bis 1,5 dl/g aufweist.

Die Copolymeren sind ebenfalls Gegenstand der Erfindung.

Gegenstand der Erfindung sind ferner die in den Ansprüchen beschriebenen Monofilamente sowie deren Verwendung zur Herstellung von Papiermaschinensieben, Filtern und Einlagen zur Verstärkung von Elastomeren. Bevorzugt werden Copolymere, welche 90 bis 96 Mol % der wiederkehrenden Struktureinheit der Formel I und 4 bis 10 Mol % der wiederkehrenden Struktureinheit der Formel II enthalten.

Bei der Dicarbonsäurekomponente in der wiederkehrenden Struktureinheit der Formel I kann es sich um von beliebigen Naphthalindicarbonsäuren abgeleitete Reste handeln. Beispiele dafür sind die 1,8-, 1,4-, 1,5-, 2,7- und insbesondere die 2,6-Derivate der Naphthalindicarbonsäure.

Diese Reste können mit ein bis zwei inerten Resten substituiert sein. Beispiele dafür sind Alkyl- oder Alkoxygruppen oder Halogenatome. Dazu zählen insbesondere Alkylgruppen mit 1 bis 6 Kohlenstoffatomen, die verzweigt oder vorzugsweise geradkettig sein können, ganz besonders bevorzugt Methyl oder Ethyl; oder Alkoxygruppen mit 1 bis 6 Kohlenstoffatomen im Alkylrest, der verzweigt oder vorzugsweise geradkettig sein kann, ganz besonders bevorzugt Methoxy oder Ethoxy; oder Chlor oder Brom.

Bedeuten irgendwelche Reste Gruppen, die sich von einem zweiwertigen aliphatischen oder cylcoaliphatischen Alkohol ableiten, so handelt es sich um beliebige zweiwertige primäre, sekundäre oder tertiäre Alkohole.

Bevorzugte aliphatische Alkohole weisen 2 bis 4 Kohlenstoffatome auf. Besonders bevorzugte Beispiele dafür sind 1,3-Propandiol, 1,4-Butandiol oder insbesondere 1,2-Ethylenglykol. Weitere Beispiele für erfindungsgemäß einzusetzende Alkohole sind Polyalkylenglykole, wie Di-, Tri- oder Tetraethylenglykol, Di-, Tri- oder Tetra-propylenglykol oder Di-, Tri- oder Tetra-butylenglykol. Diese Polyalkylenglykole werden insbesondere in geringen Anteilen in Mischungen zusammen mit den entsprechenden Alkylenglykolen eingesetzt.

Bevorzugte cycloaliphatische Alkohole weisen 6 Ringkohlenstoffatome auf. Ein bevorzugtes Beispiel dafür ist 1,4-Cyclohexandimethanol.

Diese Reste aliphatischer oder cycloaliphatischer Alkohole können mit ein bis zwei inerten Resten substituiert sein. Beispiele dafür sind Alkyl- oder Alkoxygruppen oder Halogenatome. Dazu zählen insbesondere Alkylgruppen mit 1 bis 6 Kohlenstoffatomen, die verzweigt oder vorzugsweise geradkettig sein können, ganz besonders bevorzugt Methyl oder Ethyl; oder Alkoxygruppen mit 1 bis 6 Kohlenstoffatomen im Alkylrest, der verzweigt oder vorzugsweise geradkettig sein kann, ganz besonders bevorzugt Methoxy oder Ethoxy; oder Chlor oder Brom.

Bedeuten irgendwelche Gruppen einen Rest einer aliphatischen Dicarbonsäure, so kann es sich dabei um geradkettige oder verzweigte Alkylenreste sowie um gesättigte oder um ethylenisch ungesättigte Alkylenreste handeln; vorzugsweise weisen derartige Reste ein bis zehn Kohlenstoffatome auf. Beispiele dafür sind Reste abgeleitet von der Adipinsäure, Sebacinsäure, Bernsteinsäure oder Fumarsäure.

Bedeuten irgendwelche Gruppen einen Rest einer cycloaliphatischen Dicarbonsäure, so handelt es sich dabei üblicherweise um eine Gruppe mit einem Ring mit fünf oder insbesondere sechs Kohlenstoffatomen; beispielsweise um 1,4-Cyclohexylen.

Bedeuten irgendwelche Gruppen einen Rest einer einkernigen aromatischen Dicarbonsäure, so handelt es sich dabei üblicherweise um eine Gruppe mit einem aromatischen Ring mit sechs Kohlenstoffatomen; beispielsweise um 1,3-oder 1,4-Phenylen.

Diese Reste aliphatischer, cycloaliphatischer oder aromatischer Dicarbonsäuren können mit ein bis zwei inerten Resten substituiert sein. Beispiele dafür sind Alkyl- oder Alkoxygruppen oder Halogenatome. Dazu zählen insbesondere Alkylgruppen mit 1 bis 6 Kohlenstoffatomen, die verzweigt oder vorzugsweise geradkettig sein können, ganz besonders bevorzugt Methyl oder Ethyl; oder Alkoxygruppen mit 1 bis 6 Kohlenstoffatomen im Alkylrest, der verzweigt oder vorzugsweise geradkettig sein kann, ganz besonders bevorzugt Methoxy oder Ethoxy; oder Chlor oder Brom.

Die erfindungsgemäß eingesetzten Copolyester weisen eine intrinsische Viskosität von mindestens 0,5 dl/g, vorzugsweise 0,6 bis 1,5 dl/g auf. Die Messung der intrinsischen Viskosität erfolgt in einer Lösung des Copolyesters in Dichloressigsäure bei 25 °C.

Bei einer Reihe von Anwendungen ist es von Vorteil, die erfindungsgemäß eingesetzten Copolymeren gegen thermischen und/oder chemischen Abbau zusätzlich zu stabilisieren. Dazu bietet sich der Zusatz eines Polyesterstabilisators und/oder ein Verkappen der Endgruppen des Copolyesters mit Verschlußmitteln an.

In einer besonders bevorzugten Ausführungsform weist der erfindungsgemäß einzusetzende Copolyester durch Umsetzung mit einem Carbodiimid verschlossene Carboxylendgruppen auf.

In einer weiteren besonders bevorzugten Ausführungsform weist der erfindungsgemäß einzusetzende Copolyester durch Umsetzung mit Carbodiimid verschlossene Carboxylendgruppen auf, wobei der Verschluß der Carboxylendgruppen überwiegend durch Umsetzung mit Mono- und/oder Poly-carbodiimiden erfolgt, insbesondere durch Umsetzung mit einem Gemisch aus Mono- und Polycarbodiimiden.

Dabei werden vorzugsweise 0,4 bis 1 Gew.% Monocarbodiimid, vorzugsweise 0,45 bis 0,6 Gew.%, und 0,15 bis 2,25 Gew.% Polycarbodiimid, vorzugsweise 0,75 bis 1,8 Gew.%, bezogen auf die Menge des Copolyesters, eingesetzt.

Deratig endgruppenstabilisierte Polyester sind aus der DE-A-4,307,392, aus der EP-A-503,421 und aus der EP-A-417,717 bekannt.

Die ausgewählten endgruppenstabilisierten oben definierten Copolyester sind ebenfalls ein Gegenstand der vorliegenden Erfindung.

Die erfindungsgemäß eingesetzten Monofilamente weisen üblicherweise Durchmesser von 0,1 bis 2 mm auf, vorzugsweise 0,15 bis 1 mm.

Im folgenden wird die Herstellung der erfindungsgemäß eingesetzten Monofilamente beschrieben.

Die Spinntemperatur und der Spinnverzug, der durch Einstellung der Spritzgeschwindigkeit und der Spinnabzugsgeschwindigkeit festgelegt werden kann, sowie die Verstreckbedingungen werden vorzugsweise so gewählt, daß erfindungsgemäß eingesetzte Monofilamente mit den folgenden Eigenschaften erhalten werden:

Anfangsmodul bei 25 °C von größer als 12 N/tex, vorzugsweise größer als 16 N/tex.

Feinheitsbezogene Höchstzugkraft von 30 bis 70 cN/tex, vorzugsweise von 40 bis 60 cN/tex.

Höchstzugkraftdehnung von 2 bis 20 %, vorzugsweise von 5 bis 10 %.

Schlingenfestigkeit von 15 bis 40 cN/tex, vorzugsweise 20 bis 35 cN/tex.

Knotenfestigkeit von 25 bis 50 cN/tex, vorzugsweise 30 bis 45 cN/tex.

Trockenhitzeschrumpf bei 180 °C von 1 bis 20 %, vorzugsweise 5 bis 10 %.

Die exakte Festlegung der Zusammensetzungs- und der Spinnparameter zur Erzielung einer bestimmten Kombination von Monofilamenteigenschaften kann routinemäßig durch Bestimmung der Abhängigkeit der in Betracht gezogenen Monofilamenteigenschaft von der Zusammensetzung des Polyesters und von den genannten Spinnparametern erfolgen.

Die erfindungsgemäß eingesetzen Monofilamente können außer dem oben beschriebenen Copolyester noch Additive enthalten, wie z.B. Katalysatorrückstände, Verarbeitungshilfsmittel, Stabilisatoren, Antioxidantien, Weichmacher oder Gleitmittel.

Üblicherweise sind diese Additive in einer Konzentration von bis zu 10 Gew.%, vorzugsweise 0,01 bis 5 Gew.%, insbesondere 0,1 bis 2 Gew.% vorhanden.

Bei den Katalysatorrückständen kann es sich beispielsweise um Antimontrioxid oder Tetraalkoxytitanate handeln.

Als Verarbeitungshilfsmittel oder Gleitmittel könnne Siloxane, insbesondere polymere Dialkyl- oder Diarylsiloxane und Wachse sowie organische Carbonsäuren mit mehr als 6 Kohlenstoffatomen, aliphatische, aromatische und/oder perfluorierte Ester und Ether eingesetzt werden.

Die Monofilamente können auch anorganische oder organische Pigmente oder Mattierungsmittel enthalten, wie z.B. organische Farbstoffpigmente oder Titandioxid, oder Ruß als Farb- oder Leitfähigkeitszusatz.

Als Stabilisatoren werden beispielsweise Phosphorverbindungen, wie z.B. Phosphorsäureester, eingesetzt.

In einer weiteren bevorzugten Ausführungsform können die erfindungsgemäß eingesetzten Monofilamente auch andere Polymere, wie z.B. fluorhaltige extrudierbare Polymere enthalten. Der Zusatz fluorhaltiger Polymerer bei der Herstellung von Monofilamenten ist beispielsweise aus der DE-A-4,307,394 bekannt.

Die Herstellung der erfindungsgemäß eingesetzten Copolyester erfolgt durch Polykondensation der entsprechenden Dicarbonsäure- und Diolkomponenten, wobei zweckmäßigerweise zunächst in der Schmelze bis zu einem mittleren Wert der intrinsischen Viskosität polykondensiert und anschließend in der Festphase bis zu der gewünschten Endviskosität weiterkondensiert wird. Nach der Festphasen-Polykondensation wird der hochmolekulare Copolyester in an sich bekannter Weise zu den erfindungsgemäß verwendeten Monofilamenten schmelzgesponnen.

Der Copolyester wird üblicherweise unmittelbar vor dem Verspinnen getrocknet, vorzugsweise durch Erwärmen in einer trockenen Atmosphäre oder im Vakuum.

Anschließend wird der Copolyester in einem Extruder aufgeschmolzen, in einem üblichen Spinnpack filtriert und durch eine Spinndüse ausgesponnen. Der ausgesponnene Schmelzefaden kann in einem Spinnbad (z.B. Wasser von ca. 70 °C) abgekühlt werden und mit einer Geschwindigkeit aufgewickelt oder abgezogen werden, die größer ist als die Spritzgeschwindigkeit der Copolyesterschmelze.

Als besonders vorteilhaft für die Herstellung der erfindungsgegmäß eingesetzten Monofilamente hat es sich erwiesen, bei einer Schmelzetemperatur im Bereich von 270 bis 310, vorzugsweise 280 bis 300 °C und mit einem Spinnverzug von 1 : 1,5 bis 1 : 5,0, vorzugsweise 1 : 2 bis 1 : 3 zu arbeiten.

Wird mit höheren Spinnverzügen gearbeitet, so lassen sich die erhaltenen Monfilamente zunehmend schlecht verstrecken und die mechanischen Eigenschaften, insbesondere die Knoten- und die Schlingenfestigkeit verschlechtern sich dramatisch.

Die Abkühlung der ersponnenen Monofilamente erfolgt zweckmäßigerweise durch Abschrecken in einem Spinnbad.

Die Spinnabzugsgeschwindigkeit beträgt im Interesse einer wirtschaftlichen Herstellung der erfindungsgemäßen Monofilamente 5 bis 30 m/min, vorzugsweise 10 bis 20 m/min.

Der so hergestellte Spinnfaden kann anschließend einer Nachverstreckung unterworfen werden, vorzugsweise in mehreren Stufen, insbesondere einer zwei- oder dreistufigen Nachverstreckung, mit einem Gesamt-Verstreckverhältnis von 1 : 4 bis 1 : 8, vorzugsweise 1 : 5 bis 1 : 7, und anschließend bei Temperaturen von 190 bis 250 °C, vorzugsweise von 200 bis 220 °C, thermofixiert werden, wobei bei konstanter Länge oder unter Zulassung von 2 bis 10 %, vorzugsweise 3 bis 6 % Schrumpf gearbeitet werden kann.

Ein weiterer Gegenstand der vorliegenden Erfindung ist die Verwendung der erfindungsgmäßen Fasern zur Herstellung von Papiermaschinensieben, Filtern oder Einlagen zur Verstärkung von Elastomeren.

Die Monofilamente können auf herkömmlichen Breitwebmaschinen mit den auch beim Verweben von Polyethylenterephthalat üblichen Maschinenparametern zu den Papiermaschinensieben verwebt werden.

Beispielsweise wird eine gute Webware erhalten durch Verweben von Monofilen mit 0,17 mm Durchmesser in der Kette mit Oberschüssen von 0,2 mm und Unterschüssen von 0,22 mm. Das Gewebe hat sehr gute Dimensionsstabilität und Abriebfestigkeit, die durch den Einsatz von Polyamid-Monofilamenten im Unterschuß noch verbessert werden kann.

Das erhaltene Gewebe wird in der Regel auf einer entsprechend dimensionierten Thermofixiereinrichtung nachbehandelt, um die im Einzelfall erwünschten spezifischen Siebeigenschaften einzustellen.

Das in dieser Weise aus erfindungsgemäß einzusetzenden Monofilamenten produzierte Papiermaschinen-Gewebe hat gegenüber einem aus herkömmlichen Polyethylenterephtalat-Monofilamenten hergestelltem Material eine bessere Dimensionsstabilität in Kett- und Schußrichtung und bewirkt dadurch einen ruhigeren und schnelleren Lauf in der Papiermaschine, was der Qualität und der Ausbeute des erzeugten Papiers zugute kommt.

Aus erfindungsgemäßen Monofilamenten hergestellte Gewebe können auch mit Vorteil als mechanisch und chemisch überragend stabiles Filtermaterial oder als hochbelastbare und dimensionsstabile Verstärkungseinlage für Transportbänder eingesetzt werden.

Die nachfolgenden Beispiele erläutern die Erfindung ohne diese zu begrenzen.

### Beispiel 1

Ein Copolyester erhalten durch Umsetzung von 92 Mol % 2,6-Naphthalindicarbonsäuredimethylester und 8 Mol % Dimethylterephthalat und Ethylenglykol wird bei einer Massetemperatur von 300 °C versponnen. Die so erhaltenen Monofilamente werden nach Abschreckung in einem Spinnbad von 70 °C in einem Verhältnis von 1 : 6,0 verstreckt. Man erhält Monofilamente mit den folgenden Eigenschaften:

| | |
|---|---|
| Durchmesser | 0,17 mm |
| Reißfestigkeit | 55 cN/tex |
| Reißdehnung | 10,5 % |
| Modul | 18 N/tex |
| Knotenfestigkeit | 25 cN/tex |
| Schlingenfestigkeit | 29 cN/tex |

Demgegenüber weisen nach dem gleichen Verfahren hergestellte Monofilamente aus Poly-(ethylen-2,6-naphthalat) lediglich eine Schlingenfestigkeit von 5 cN/tex auf.

### Beispiel 2

Ein analog Beispiel 1 hergestelltes Monofilament mit einem Durchmesser von 0,5 mm weist nach einer Sattdampfbehandlung von 80 Stunden bei 135 °C eine Restreißfestigkeit von 52 % auf.

Durch Zusatz von Carbodiimiden erhöht sich die Restreißfestigkeit auf über 90 %.

Demgegenüber weist ein mit Carbodiimiden stabilisiertes Monofilament aus Polyethylenterephthalat eine Restreißfestigkeit von 35 % auf.

## Patentansprüche (Patentansprüche für folgende(n) Vertragsstaat(en): CH, IT, LI)

1. Papiermaschinensieb enthaltend Monofilamente aus Copolymeren, die 85 bis 99 Mol % der wiederkehrenden Struktureinheit der Formel I 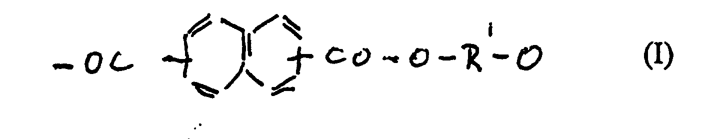 und 1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet,
R³ eine der für R¹ definierten Bedeutungen annimmt, und die Mengenangaben auf die Gesamtmenge des Polymeren bezogen sind, und das Copolymer eine intrinsische Viskosiktät, gemessen in einer Lösung des Copolyesters in Dichloressigsäure bei 25°C, von 0,5 bis 1,5 dl/g aufweist.

2. Papiermaschinensieb nach Anspruch 1, **dadurch gekennzeichnet, daß** das Copolymere 90 bis 96 Mol % der wiederkehrenden Struktureinheit der Formel I und 4 bis 10 Mol % der wiederkehrenden Struktureinheit der Formel II enthält.

3. Papiermaschinensieb nach Anspruch 1, **dadurch gekennzeichnet, daß** der Dicarbonsäureteil in der wiederkehrenden Struktureinheit der Formel I sich von 2,6-Naphthalindicarbonsäure ableitet.

4. Papiermaschinensieb nach Anspruch 1, **dadurch gekennzeichnet, daß** R¹ und/oder R³ sich von 1,3-Propandiol, 1,4-Butandiol oder insbesondere von 1,2-Ethylenglykol ableiten.

5. Papiermaschinensieb nach Anspruch 1, **dadurch gekennzeichnet, daß** R¹ und/oder R³ sich von 1,4-Cyclohexandimethanol ableiten.

6. Papiermaschinensieb nach Anspruch 1, **dadurch gekennzeichnet, daß** R² sich von Terephthalsäure und/oder Isophthalsäure ableiten.

7. Papiermaschinensieb nach Anspruch 1, **dadurch gekennzeichnet, daß** die Monofilamente mindestens ein weiteres extrudierbares Polymeres, vorzugsweise ein fluorhaltiges extrudierbares Polymeres, enthalten.

8. Filter enthaltend Monofilamente aus Copolymeren, die 85 bis 99 Mol % der wiederkehrenden Struktureinheit der Formel I 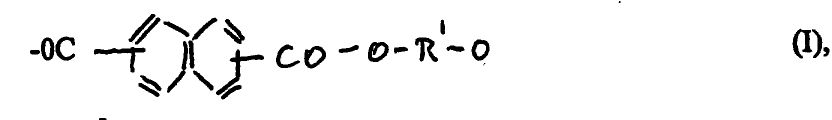 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet, R³ eine der für R¹ definierten Bedeutungen annimmt, und die Mengenangaben auf die Gesamtmenge des Polymeren bezogen sind, und das Copolymer ein intrinsische Viskosität, gemessen in einer Lösung des Copolyesters in Dichloressigsäure bei 25°C, von 0,5 bis 1,5 dl/g aufweist.

9. Filter nach Anspruch 8, **dadurch gekennzeichnet, daß** das **Copolymere 90** bis 96 Mol % der wiederkehrenden Struktureinheit der Formel I und 4 bis **10** Mol % der wiederkehrenden Struktureinheit der Formel II enthält.

10. Filter nach Anspruch 8, **dadurch gekennzeichnet, daß** der Dicarbonsäureteil in der wiederkehrenden Struktureinheit der Formel I sich von 2,6-Naphthalindicarbonsäure ableitet.

11. Filter nach Anspruch 8, **dadurch gekennzeichnet, daß** R¹ und/oder R³ sich von 1,3-Propandiol, 1,4-Butandiol oder insbesondere von 1,2-Ethylenglykol ableiten.

12. Filter nach Anspruch 8, **dadurch gekennzeichnet, daß** R¹ und/oder R³ sich von 1,4-Cyclohexandimethanol ableiten.

13. Filter nach Anspruch 8, **dadurch gekennzeichnet, daß** R² sich von Terephthalsäure und/oder Isophthalsäure ableiten.

14. Filter nach Anspruch 1, **dadurch gekennzeichnet, daß** die Monofilamente mindestens ein weiteres extrudierbares Polymeres, vorzugsweise ein fluorhaltiges extrudierbares Polymeres, enthalten.

15. Einlage zur Verstärkung von Elastomeren enthaltend Monofilamente aus Copolymeren, die 85 bis 99 Mol % der wiederkehrenden Struktureinheit der Formel I 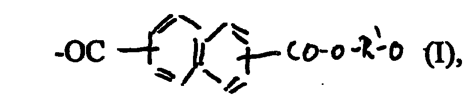 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäuren mit 1 bis 10 Kohlenstoffatomen, einer cycloaliphatischen Dicarbonsäuren mit 5 bis 6 Kohelenstoffatomen oder einkernigen aromatischen Dicarbonsäuren darstellt oder sich von Mischungern derartiger Dicarbonsäuren ableitet,
R³ eine der R¹ definierten Bedeutungen annimmt, und die Mengenangaben auf die Gesamtmenge des Polymeren bezogen sind, und das Copolymer eine intrinsische Viskosität, gemessen in einer Lösung des Copolyesters in Dichloressigsäure bei 25°C, von 0,5 bis 1,5 dl/g aufweist.

16. Einlage zur Verstärkung von Elastomeren nach Anspruch 15, **dadurch gekennzeichnet, daß** das Copolymere 90 bis 96 Mol % der wiederkehrenden Struktureinheit der Formel I und 4 bis 10 Mol % der wiederkehrenden Struktureinheit der Formel II enthält.

17. Einlage zur Verstärkung von Elastomeren nach Anspruch 15, **dadurch gekennzeichnet, daß** der Dicarbonsäureteil in der wiederkehrenden Struktureinheit der Formel I sich von 2,6-Naphthalindicarbonsäure ableitet.

18. Einlage zur Verstärkung von Elastomeren nach Anspruch 15, **dadurch gekennzeichnet, daß** R¹ undloder R³ sich von 1,3-Propandiol, 1,4-Butandiol oder insbesondere von 1,2-Ethylenglykol ableiten.

19. Einlage zur Verstärkung von Elastomeren nach Anspruch 15, **dadurch gekennzeichnet, daß** R¹ und/oder R³ sich von 1,4-Cyclohexandimethanol ableiten.

20. Einlage zur Verstärkung von Elastomeren nach Anspruch 15, **dadurch gekennzeichnet, daß** R² sich von Terephthalsäure und/oder Isophthalsäure ableiten.

21. Einlage zur Verstärkung von Elastomeren nach Anspruch 15, **dadurch gekennzeichnet, daß** die Monofilamente mindestens ein weiteres extrudierbares Polymeres, vorzugsweise ein fluorhaltiges extrudierbares Polymeres, enthalten.

22. Copolymere enthaltend 85 bis 99 Mol % der wiederkehrenden Struktureinheit der Formel I 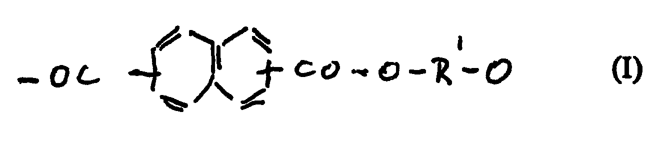 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet,
R³ eine der für R¹ definierten Bedeutungen annimmt, und die Mengenangaben auf die Gesamtmenge des Polymeren bezogen sind, und das Copolymer eine intrinsische Viskosiktät, gemessen in einer Lösung des Copolyester in Dichloressigsäure bei 25°C, von 0,5 bis 1,5 dl/g aufweist.

23. Copolymere nach Anspruch 22, **dadurch gekennzeichnet, daß** diese durch Umsetzung mit einem Mono- und/oder Poly-carbodiimid, vorzugsweise mit einer Kombination aus Mono- und Poly-carbodiimid, stabilisiert sind.

24. Monofilamente mit einem Durchmesser von 0,1 bis 2 mm, einem Anfangsmodul bei 25°C von > 12 N/tex , einer einheitsbezogenen Höchstzugkraft von 30 bis 70 cN/tex, einer Höchstzugkraftdehnung von 2 bis 20 %, einer Schlingenfestigkeit von 15 bis 40 cN/tex, einer Knotenfestigkeit von 25 bis 50 cN/tex, einem Trockenhitzeschrumpf bei 180°C von 1 bis 20 %, hergestellt aus Copolymeren, die 85 bis 99 Mol % der wiederkehrenden Struktureinheit der Formel I 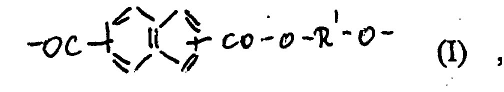 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierter cycloaliphatischen Alkohols mit 6 Kohlenstoffatomen ist oder sich von Mischungen derartiger Alkohole oder Polyakylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet,
R³ eine der für R¹ definierten Bedeutungen annimmt, und die Mengenangaben auf die Gesamtmenge des Polymeren bezogen sind, und das Copolymer eine intrinsische Viskosität, gemessen in einer Lösung des Copolyesters in Dichloressigsäure bei 25°C, von 0,5 bis 1,5 dl/g aufweist.

25. Verwendung der Monofilamente nach Anspruch 24 zur Herstellung von Papiermaschinensieben.

26. Verwendung der Monofilamente nach Anspruch 24 zur Herstellung von Filtern.

27. Verwendung der Monofilamente nach Anspruch 24 zur Herstellung von Einlagen zur Verstärkung von Elastomeren.

28. Monofilamente mit einem Durchmesser von 0,1 bis 2 mm, einem Anfangsmodul bei 25°C von > 12 N/tex, einer einheitsbezogenen Höchstzugkraft von 30 bis 70 cN/tex, einer Höchstzugkraftdehnung von 2 bis 20 %, einer Schlingenfestigkeit von 15 bis 40 cN/tex, einer Knotenfestigkeit von 25 bis 50 cN/tex, einem Trockenhitzeschrumpf bei 180°C von 1 bis 20 %, hergestellt aus Copolymeren, die 85 bis 99 Mol % der wiederkehrenden Struktureinheit der Formel I 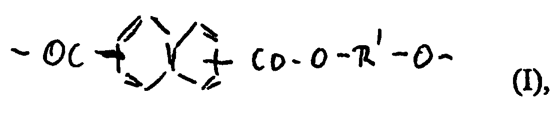 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 5 bis 6 Kohlenstoffatomen oder einkernigen aromatischen Dicarbonsäuren darstellt ode sich von Mischungen derartiger Dicarbonsäuren ableitet, R³ eine der für R¹ definierten Bedeutungen annimmt, und die Mengenangaben auf die Gesamtmenge des Polymeren bezogen sind, und das Copolymer eine intrinsische viskosität, gemessen in einer Lösung des Copolyesters in Dichloressigsäure bei 25°C, von 0,5 bis 1,5 dl/g aufweist und die Endgruppen dieses Copolymeren durch Verkappen mit einem Verschlußmittel, vorzugsweise einem Carbodiimid, stabilisiert sind.

29. Monofilamente nach Anspruch 28, **dadurch gekennzeichnet, daß** das Verschlußmittel ein Mono- oder ein Polycarbodiimid oder eine Kombination derselben ist.

30. Verwendung der Monofilamente gemäß den Ansprüchen 28 oder 29 zur Herstellung von Papiermaschinensieben.

31. Verwendung der Monofilamente gemäß den Ansprüchen 28 oder 29 zur Herstellung von Filtern.

32. Verwendung der Monofilamente gemäß den Ansprüchen 28 oder 29 zur Herstellung von Einlagen zur Verstärkung von Elastomeren.

## Patentansprüche (Patentansprüche für folgende(n) Vertragsstaat(en): DE, GB)

1. Papiermaschinensieb enthaltend Monofilamente aus Copolymeren, die 85 bis 99 Mol % der wiederkehrenden Struktureinheit der Formel I 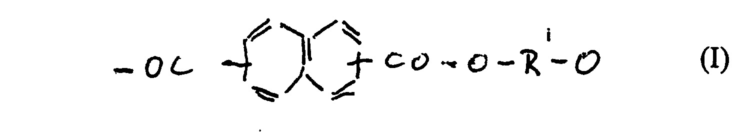 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet,
R³ eine der für R¹ definierten Bedeutungen annimmt, und die Mengenangaben auf die Gesamtmenge des Polymeren bezogen sind, und das Copolymer eine intrinsische Viskosiktät, gemessen in einer Lösung des Copolyesters in Dichloressigsäure bei 25°C, von 0,5 bis 1,5 dl/g aufweist

2. Papiermaschinensieb nach Anspruch 1, **dadurch gekennzeichnet, daß** das Copolymere 90 bis 96 Mol % der wiederkehrenden Struktureinheit der Formel I und 4 bis 10 Mol % der wiederkehrenden Struktureinheit der Formel II enthält.

3. Papiermaschinensieb nach Anspruch 1, **dadurch gekennzeichnet, daß** der Dicarbonsäureteil in der wiederkehrenden Struktureinheit der Formel I sich von 2,6-Naphthalindicarbonsäure ableitet.

4. Papiermaschinensieb nach Anspruch 1, **dadurch gekennzeichnet, daß** R¹ und/oder R³ sich von 1,3-Propandiol, 1,4-Butandiol oder insbesondere von 1,2-Ethylenglykol ableiten.

5. Papiermaschinensieb nach Anspruch 1, **dadurch gekennzeichnet, daß** R¹ und/oder R³ sich von 1,4-Cyclohexandimethanol ableiten.

6. Papiermaschinensieb nach Anspruch 1, **dadurch gekennzeichnet, daß** R² sich von Terephthalsäure und/oder Isophthalsäure ableiten.

7. Papiermaschinensieb nach Anspruch 1, **dadurch gekennzeichnet, daß** die Monofilamente mindestens ein weiteres extrudierbares Polymeres, vorzugsweise ein fluorhaltiges extrudierbares Polymeres, enthalten.

8. Filter enthaltend Monofilamente aus Copolymeren, die 85 bis 99 Mol % der wiederkehrenden Struktureinheit der Formel I 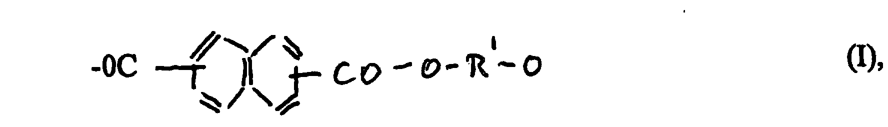 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet, R³ eine der für R¹ definierten Bedeutungen annimmt, und die Mengenangaben auf die Gesamtmenge des Polymeren bezogen sind, und das Copolymer ein intrinsische Viskosität, gemessen in einer Lösung des Copolyesters in Dichloressigsäure von bei 25°C, von 0,5 bis 1,5 dl/g aufweist.

9. Filter nach Anspruch 8, **dadurch gekennzeichnet, daß** das Copolymere 90 bis 96 Mol % der wiederkehrenden Struktureinheit der Formel I und 4 bis 10 Mol % der wiederkehrenden Struktureinheit der Formel II enthält.

10. Filter nach Anspruch 8, **dadurch gekennzeichnet, daß** der Dicarbonsäureteil in der wiederkehrenden Struktureinheit der Formel I sich von 2,6-Naphthalindicarbonsäure ableitet.

11. Filter nach Anspruch 8, **dadurch gekennzeichnet, daß** R¹ und/oder R³ sich von 1,3-Propandiol, 1,4-Butandiol oder insbesondere von 1,2-Ethylenglykol ableiten.

12. Filter nach Anspruch 8, **dadurch gekennzeichnet, daß** R¹ und/oder R³ sich von 1,4-Cyclohexandimethanol ableiten.

13. Filter nach Anspruch 8, **dadurch gekennzeichnet, daß** R² sich von Terephthalsäure und/oder Isophthalsäure ableiten.

14. Filter nach Anspruch 1, **dadurch gekennzeichnet, daß** die Monofilamente mindestens ein weiteres extrudierbares Polymeres, vorzugsweise ein fluorhaltiges extrudierbares Polymeres, enthalten.

15. Einlage zur Verstärkung von Elastomeren enthaltend Monofilamente aus Copolymeren, die 85 bis 99 Mol % der wiederkehrenden Struktureinheit der Formel I 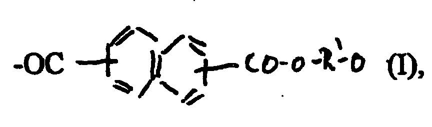 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäuren mit 1 bis 10 Kohlenstoffatomen, einer cycloaliphatischen Dicarbonsäuren mit 5 bis 6 Kohelenstoffatomen oder einkernigen aromatischen Dicarbonsäuren darstellt oder sich von Mischungern derartiger Dicarbonsäuren ableitet,
R³ eine der R¹ definierten Bedeutungen annimmt, und die Mengenangaben auf die Gesamtmenge des Polymeren bezogen sind, und das Copolymer eine intrinsische Viskosität, gemessen in einer Lösung des Copolyesters in Dichloressigsäure bei 25°C, von 0,5 bis 1,5 dl/g aufweist.

16. Einlage zur Verstärkung von Elastomeren nach Anspruch 15, **dadurch gekennzeichnet, daß** das Copolymere 90 bis 96 Mol % der wiederkehrenden Struktureinheit der Formel I und 4 bis 10 Mol % der wiederkehrenden Struktureinheit der Formel II enthält.

17. Einlage zur Verstärkung von Elastomeren nach Anspruch 15, **dadurch gekennzeichnet, daß** der Dicarbonsäureteil in der wiederkehrenden Struktureinheit der Formel I sich von 2,6-Naphthalindicarbonsäure ableitet.

18. Einlage zur Verstärkung von Elastomeren nach Anspruch 15, **dadurch gekennzeichnet, daß** R¹ und/oder R³ sich von 1,3-Propandiol, 1,4-Butandlol oder insbesondere von 1,2-Ethylenglykol ableiten.

19. Einlage zur Verstärkung von Elastomeren nach Anspruch 15, **dadurch gekennzeichnet, daß** R¹ und/oder R³ sich von 1,4-Cyclohexandimethanol ableiten.

20. Einlage zur Verstärkung von Elastomeren nach Anspruch 15, **dadurch gekennzeichnet, daß** R² sich von Terephthalsäure und/oder Isophthalsäure ableiten.

21. Einlage zur Verstärkung von Elastomeren nach Anspruch 15, **dadurch gekennzeichnet, daß** die Monofilamente mindestens ein weiteres extrudierbares Polymeres, vorzugsweise ein fluorhaltiges extrudierbares Polymeres, enthalten.

22. Monofilamente mit einem Durchmesser von 0,1 bis 2 mm, einem Anfangsmodul bei 25°C von > 12 N/tex , einer einheitsbezogenen Höchstzugkraft von 30 bis 70 cN/tex, einer Höchstzugkraftdehnung von 2 bis 20 %, einer Schlingenfestigkeit von 15 bis 40 cN/tex, einer Knotenfestigkeit von 25 bis 50 cN/tex, einem Trockenhitzeschrumpf bei 180°C von 1 bis 20 %, hergestellt aus Copolymeren, die 85 bis 99 Mol % der wiederkehrenden Struktureinheit der Formel I 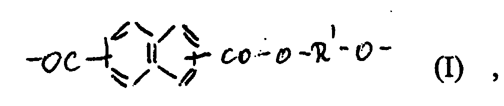 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierter cycloaliphatischen Alkohols mit 6 Kohlenstoffatomen ist oder sich von Mischungen derartiger Alkohole oder Polyakylenglykolen ableitet, R² ein Rest einer aliphatischen Dicarbonsäure mit 1 bis 10 Kohlenstoffatomen, einer cycloaliphatischen Dicarbonsäure mit 5 bis 6 Kohlenstoffatomen oder einkernigen aromatischen Dicarbonsäuren darstellt oder sich von Mischungen derartiger Dicarbonsäuren ableitet, R³ eine der für R¹ definierten Bedeutungen annimmt, und die Mengenangaben auf die Gesamtmenge des Polymeren bezogen sind, und das Copolymer eine intrinsische Viskosität, gemessen in einer Lösung des Copolyesters in Dichloressigsäure bei 25°C, von 0,5 bis 1,5 dl/g aufweist.

23. Verwendung der Monofilamente nach Anspruch 22 zur Herstellung von Papiermaschinensieben.

24. Verwendung der Monofilamente nach Anspruch 22 zur Herstellung von Filtern.

25. Verwendung der Monofilamente nach Anspruch 22 zur Herstellung von Einlagen zur Verstärkung von Elastomeren.

26. Monofilamente mit einem Durchmesser von 0,1 bis 2 mm, einem Anfangsmodul bei 25°C von > 12 N/tex, einer einheitsbezogenen Höchstzugkraft von 30 bis 70 cN/tex, einer Höchstzugkraftdehnung von 2 bis 20 %, einer Schlingenfestigkeit von 15 bis 40 cN/tex, einer Knotenfestigkeit von 25 bis 50 cN/tex, einem Trockenhitzeschrumpf bei 180°C von 1 bis 20 %, hergestellt aus Copolymeren, die 85 bis 99 Mol % der wiederkehrenden Struktureinheit der Formel I 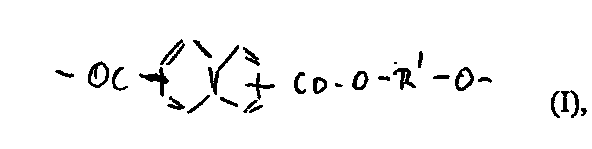 und
1 bis 15 Mol % der wiederkehrenden Struktureinheit der Formel II enthalten
-OC-R²-CO-O-R³-O- (II),
worin R¹ ein Rest eines gegebenenfalls substituierten zweiwertigen aliphatischen Alkohols mit 2 bis 4 Kohlenstoffatomen oder eines gegebenenfalls substituierten cycloaliphatischen Alkohols mit 6 Kohlenstoffatomen ist oder sich von Mischungen derartiger Alkohole oder Polyalkylenglykolen ableitet, R² ein Rest einer aliphatischen Dicarbonsäure mit 5 bis 6 Kohlenstoffatomen oder einkernigen aromatischen Dicarbonsäuren darstellt ode sich von Mischungen derartiger Dicarbonsäuren ableitet, R³ eine der für R¹ definierten Bedeutungen annimmt, und die Mengenangaben auf die Gesamtmenge des Polymeren bezogen sind, und das Copolymer eine intrinsische viskosität, gemessen in einer Lösung des Copolyesters in Dichloressigsäure bei 25°C, von 0,5 bis 1,5 dl/g aufweist und die Endgruppen dieses Copolymeren durch Verkappen mit einem Verschlußmittel, vorzugsweise einem Carbodiimid, stabilisiert sind.

27. Monofilamente nach Anspruch 26, **dadurch gekennzeichnet, daß** das Verschlußmittel ein Mono- oder ein Polycarbodiimid oder eine Kombination derselben ist.

28. Verwendung der Monofilamente gemäß den Ansprüchen 26 oder 27 zur Herstellung von Papiermaschinensieben.

29. Verwendung der Monofilamente gemäß den Ansprüchen 26 oder 27 zur Herstellung von Filtern.

30. Verwendung der Monofilamente gemäß den Ansprüchen 26 oder 27 zur Herstellung von Einlagen zur Verstärkung von Elastomeren.

31. Verwendung der Monofilamente gemäß den Ansprüchen 28 oder 29 zur Herstellung von Filtern.

32. Verwendung der Monofilamente gemäß den Ansprüchen 28 oder 29 zur Herstellung von Elastomeren.

## Claims (Claims for the following Contracting State(s): CH, IT, LI)

1. A paper making machine filter containing monofilaments consisting of copolymers which contain 85 to 99 mol% of the recurring structural unit in Formula I 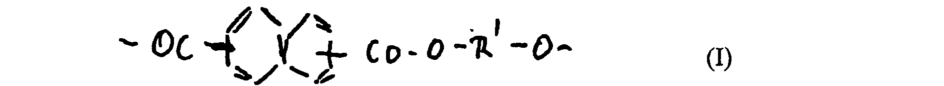 and
1 to 15 mol% of the recurring structural unit of Formula II
-OC-R²-CO-O-R³-O- (II),
in which R¹ is a radical of a possibly substituted bivalent aliphatic alcohol with 2 to 4 carbon atoms or a possibly substituted cycloaliphatic alcohol with 6 carbon atoms or which is derived from mixtures of such alcohols or polyalkylene glycols, R² is a radical of an aliphatic dicarboxylic acid with 1 to 10 carbon atoms, a cyclo-aliphatic dicarboxylic acid with 5 to 6 carbon atoms or mononuclear aromatic dicarboxylic acids or which is derived from mixtures of such dicarboxylic acids,
R³ assumes a significance defined for R¹ and the quantitative details are referred to the total quantity of polymer and the copolymer comprises an intrinsic viscosity measured in a solution of the copolyester in dichloroacetic acid at 25°C of 0.5 to 1.5 dl/g.

2. A paper making machine filter according to claim 1, **characterised in that** the copolymer contains 90 to 96 mol% of the recurring structural unit of Formula I and 4 to 10 mol% of the recurring structural unit of Formula II.

3. A paper making machine filter according to claim 1, **characterised in that** the dicarboxylic part in the recurring structural unit of Formula I is derived from 2,6-naphthalene dicarboxylic acid.

4. A paper making machine filter according to claim 1, **characterised in that** R¹ and/or R³ are derived from 1,3-propane diol, 1,4-butane diol or in particular from 1,2-ethylene glycol.

5. A paper making machine filter according to claim 1, **characterised in that** R¹ and/or R² are derived from 1,4-cyclohexane dimethanol.

6. A paper making machine filter according to claim 1, **characterised in that** R² is derived from terephthalic acid and/or isophthalic acid.

7. A paper making machine filter according to claim 1, **characterised in that** the monofilaments contain at least one further extrudable polymer preferably a fluorene-containing extrudable polymer.

8. A filter containing monofilaments of copolymers which contain 85 to 99 mol% of the recurring structure unit of Formula I 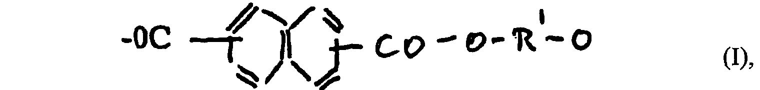 and
1 to 15 mol% of the recurring structural unit of Formula II
-OC-R²-CO-O-R³-O- (II),
in which R¹ is a radical of a possibly substituted bivalent aliphatic alcohol with 2 to 4 carbon atoms or 1 possibly substituted cycloaliphatic alcohol with 6 carbon atoms or which is derived from mixtures of such alcohols or polyalkylene glycols, R² is a radical of an aliphatic dicarboxylic acid with 1 to 10 carbon atoms, a cycloaliphatic dicarboxylic acid with 5 to 6 carbon atoms or mononuclear aromatic dicarboxylic acids or is derived from mixtures of such dicarboxylic acids, R³ assumes a significance defined for R¹ and the quantitative details are related to the total quantity of polymer and the copolymer has an intrinsic viscosity, measured in a solution of the copolyester in dichloroacetic acid of 0.5 to 1.5 dl/g at 25°C.

9. A filter according to claim 8, **characterised in that** the copolymer contains 90 to 96 mol% of the recurring structural unit of Formula I and 4 to 10 mol% of the recurring structural unit of Formula II.

10. A filter according to claim 8, **characterised in that** the dicarboxylic acid part in the recurring structural unit of Formula I is derived from 2,6-naphthalene dicarboxylic acid.

11. A filter according to claim 8, **characterised in that** R¹ and/or R³ are derived from 1,3-propane diol, 1,4-butane diol or particularly 1,2-ethylene glycol.

12. A filter according to claim 8, **characterised in that** R¹ and/r R² are derived from 1,4-cyclohexane dimethanol.

13. A filter according to claim 8, **characterised in that** R² is derived from terephthalic acid and/or isophthalic acid.

14. A filter according to claim 1, **characterised in that** the monofilaments contain at least one further extrudable polymer, preferably a fluorene-containing extrudable polymer.

15. An inlay to strengthen elastomers containing monofilaments of copolymers which contain 85 to 99 mol% of the recurring structural unit of Formula I 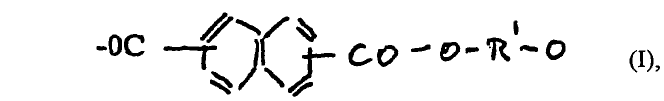 and 1 to 15 mol% of the recurring structural unit of Formula II
-OC-R²-CO-O-R³-O- (II),
in which R¹ is a radical of a possibly substituted bivalent aliphatic alcohol with 2 to 4 carbon atoms or a possibly substituted cycloaliphatic alcohol with 6 carbon atoms or is derived from mixtures of such alcohols or polyalkylene glycols, R² is a radical of an aliphatic dicarboxylic acid containing 1 to 10 carbon atoms, a cycloaliphatic dicarboxylic acid with 5 to 6 carbon atoms or mononuclear aromatic dicarboxylic acids or is derived from mixtures of such dicarboxylic acids, R³ assumes one of the significance defined for R¹ and the quantitative details relate to the total quantity of polymer and the copolymer has an intrinsic viscosity of 0.5 to 1.5 dl/g measured in a solution of the copolyester in dichloroacetic acid at 25°C.

16. An inlay to reinforce elastomers according to claim 15, **characterised in that** the copolymer contains 90 to 96 mol% of the recurring structural unit in Formula I and 4 to 10 mol% of the recurring structural unit Formula II.

17. An inlay to reinforce elastomers according to claim 15, **characterised in that** the dicarboxylic acid part in the recurring structural unit of Formula I is derived from 2,6-naphthalene dicarboxylic acid.

18. An inlay to reinforce elastomers according to claim 15, **characterised in that** R¹ and/or R³ are derived from 1,3-propane diol, 1,4-butane diol or particularly 1,2-ethylene glycol.

19. An inlay to reinforce elastomers according to claim 15, **characterised in that** R¹ and/or R³ are derived from 1,4-cyclohexane dimethanol.

20. An inlay to reinforce elastomers according to claim 15, **characterised in that** R² is derived from terephthalic acid and/or isophthalic acid.

21. An inlay to reinforce elastomers according to claim 15, **characterised in that** the monofilaments contain at least one further extrudable polymer preferably a fluorene-containing extrudable polymer.

22. Copolymers containing 85 to 99 mol% of the recurring structural unit in Formula I 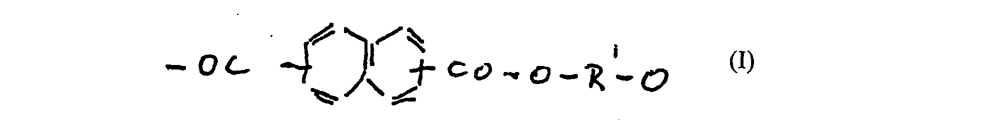 and
1 to 15 mol% of the recurring structure in Formula II containing:
-OC-R²-CO-O-R³-O- (II),
in which R¹ is a radical of a possibly substituted bivalent aliphatic alcohol with 2 to 4 carbon atoms or 1 possibly substituted cycloaliphatic alcohol with 6 carbon atoms or is derived from mixtures of such alcohols or polyalkylene glycols, R² is a radical of an aliphatic dicarboxylic acid with 1 to 10 carbon atoms, a cycloaliphatic dicarboxylic acid with 5 to 6 carbon atoms or mononuclear aromatic dicarboxylic acids or is derived from mixtures of such dicarboxylic acids,
R³ assumes one of the significances defined for R¹ and the quantitative details relate to the total quantity of polymer and the copolymer has an intrinsic viscosity measured in a solution of the copolyester in dichloroacetic acid at 25°C, of 05 to 1.5 dl/g.

23. Copolymers according to claim 22, **characterised in that** these are stabilised by reaction with a mono- and/or polycarbodiimide, preferably with a combination of mono- and polycarbodiimide.

24. Monofilaments with a diameter of 0.1 to 2 mm, an initial modulus at 25°C of > 12 N/tex, a unit related maximum tensile force of 30 to 70 cN/tex, a maximum tensile force elongation of 2 to 20%, a loop strength of 15 to 20 cN/tex, a nodal strength of 35 to 30 cN/tex, a dry heat shrinkage at 180°C of 1 to 20%, produced from copolymers which contain 85 to 99 mol% of the recurring structural unit of Formula I 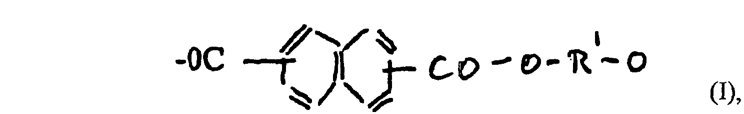 and
1 to 15 mol% of the recurring structural unit of Formula II
-OC-R²-CO-O-R³-O- (II),
in which R¹ is a radical of a possibly substituted bivalent aliphatic alcohol with 2 to 4 carbon atoms or a possibly substituted cycloaliphatic alcohol with 6 carbon atoms or is derived from mixtures of such alcohols or polyalkylene glycols, R² is a radical of an aliphatic dicarboxylic acid with 1 to 10 carbon atoms, a cycloaliphatic dicarboxylic acid with 5 to 6 carbon atoms or mononuclear aromatic dicarboxylic acids or is derived from mixtures of such dicarboxylic acids,
R³ assumes one of the meanings defined for R¹ and the quantitative details are related to the total quantity of the polymer and a copolymer has an intrinsic viscosity of 0.5 to 1.5 dl/g measured in a solution of the copolyester in dichloroacetic acid at 25°C.

25. Use of the monofilaments according to claim 24 for producing paper making machine filters.

26. Use of the monofilaments according to claim 24 for producing filters.

27. Use of the monofilaments according to claim 24 for producing inlays for reinforcing elastomers.

28. Monofilaments with a diameter of 0.1 to 2 mm, an initial modulus at 25°C of > 12 N/tex, a unit related maximum tensile strength of 30 to 70 cN/tex, a maximum tensile strength elongation of 2 to 20%, a loop strength of 15 to 40 cN/tex, a nodal strength of 25 to 50 cN/tex, a dry heat shrinkage at 180°C of 1 to 20%, produced from copolymers which contain 85 to 99 mol% of the recurring structural formula of Formula I 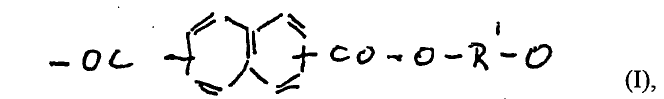 and
1 to 15 mol% of the recurring structural formula of Formula II
-OC-R²-CO-O-R³-O- (II),
in which R¹ is a radical of a possibly substituted bivalent aliphatic alcohol with 2 to 4 carbon atoms or one possibly substituted cycloaliphatic alcohols with 6 carbon atoms or is derived from mixtures of such alcohols or polyalkylene glycols, R² is a radical of an aliphatic dicarboxylic acid with 5 to 6 carbon atoms or mononuclear aromatic dicarboxylic acids or is derived from mixtures of such dicarboxylic acids, R³ assumes one of the meanings defined for R¹ and the quantitative details refer to the total quantity of the polymer and the copolymer has an intrinsic viscosity, measured in a solution of the copolyester in dichloroacetic acid at 25°C, of 0.5 to 1.5 dl/g and the terminal groups of this copolymer are stabilised by being capped with an occluding means, preferably a carbodiimide.

29. Monofilaments according to claim 28, **characterised in that** the occluding means are a mono- or a polycarbodiimide or a combination thereof.

30. Use of the monofilaments according to claim 28 or 29 for the production of paper making machine filters.

31. Use of the monofilaments according to claim 28 or 29 for producing filters.

32. Use of the monofilaments according to claim 28 or 29 for producing inlays for reinforcing elastomers.

## Claims (Claims for the following Contracting State(s): DE, GB)

1. A paper making machine filter containing monofilaments consisting of copolymers which contain 85 to 99 mol% of the recurring structural unit in Formula I 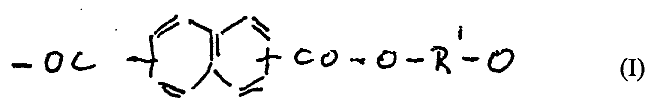 and
1 to 15 mol% of the recurring structural unit of Formula II
-OC-R²-CO-O-R³-O- (II),
in which R¹ is a radical of a possibly substituted bivalent aliphatic alcohol with 2 to 4 carbon atoms or a possibly substituted cycloaliphatic alcohol with 6 carbon atoms or which is derived from mixtures of such alcohols or polyalkylene glycols, R² is a radical of an aliphatic dicarboxylic acid with 1 to 10 carbon atoms, a cyclo-aliphatic dicarboxylic acid with 5 to 6 carbon atoms or mononuclear aromatic dicarboxylic acids or which is derived from mixtures of such dicarboxylic acids,
R³ assumes a significance defined for R¹ and the quantitative details are referred to the total quantity of polymer and the copolymer comprises an intrinsic viscosity measured in a solution of the copolyester in dichloroacetic acid at 25°C of 0.5 to 1.5 dl/g.

2. A paper making machine filter according to claim 1, **characterised in that** the copolymer contains 90 to 96 mol% of the recurring structural unit of Formula I and 4 to 10 mol% of the recurring structural unit of Formula II.

3. A paper making machine filter according to claim 1, **characterised in that** the dicarboxylic part in the recurring structural unit of Formula I is derived from 2,6-naphthalene dicarboxylic acid.

4. A paper making machine filter according to claim 1, **characterised in that** R¹ and/or R³ are derived from 1,3-propane diol, 1,4-butane diol or in particular from 1,2-ethylene glycol.

5. A paper making machine filter according to claim 1, **characterised in that** R¹ and/or R² are derived from 1,4-cyclohexane dimethanol.

6. A paper making machine filter according to claim 1, **characterised in that** R² is derived from terephthalic acid and/or isophthalic acid.

7. A paper making machine filter according to claim 1, **characterised in that** the monofilaments contain at least one further extrudable polymer preferably a fluorene-containing extrudable polymer.

8. A filter containing monofilaments of copolymers which contain 85 to 99 mol% of the recurring structure unit of Formula I 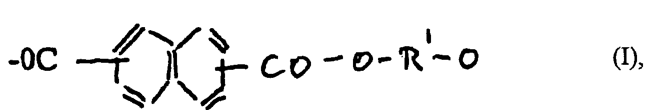 and
1 to 15 mol% of the recurring structural unit of Formula II
-OC-R²-CO-O-R³-O- (II),
in which R¹ is a radical of a possibly substituted bivalent aliphatic alcohol with 2 to 4 carbon atoms or 1 possibly substituted cycloaliphatic alcohol with 6 carbon atoms or which is derived from mixtures of such alcohols or polyalkylene glycols, R² is a radical of an aliphatic dicarboxylic acid with 1 to 10 carbon atoms, a cycloaliphatic dicarboxylic acid with 5 to 6 carbon atoms or mononuclear aromatic dicarboxylic acids or is derived from mixtures of such dicarboxylic acids, R³ assumes a significance defined for R¹ and the quantitative details are related to the total quantity of polymer and the copolymer has an intrinsic viscosity, measured in a solution of the copolyester in dichloroacetic acid of 0.5 to 1.5 dl/g at 25°C.

9. A filter according to claim 8, **characterised in that** the copolymer contains 90 to 96 mol% of the recurring structural unit of Formula I and 4 to 10 mol% of the recurring structural unit of Formula II.

10. A filter according to claim 8, **characterised in that** the dicarboxylic acid part in the recurring structural unit of Formula I is derived from 2,6-naphthalene dicarboxylic acid.

11. A filter according to claim 8, **characterised in that** R¹ and/or R³ are derived from 1,3-propane diol, 1,4-butane diol or particularly 1,2-ethylene glycol.

12. A filter according to claim 8, **characterised in that** R¹ and/r R² are derived from 1,4-cyclohexane dimethanol.

13. A filter according to claim 8, **characterised in that** R² is derived from terephthalic acid and/or isophthalic acid.

14. A filter according to claim 1, **characterised in that** the monofilaments contain at least one further extrudable polymer, preferably a fluorene-containing extrudable polymer.

15. An inlay to strengthen elastomers containing monofilaments of copolymers which contain 85 to 99 mol% of the recurring structural unit of Formula I 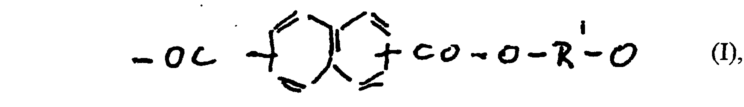 and
1 to 15 mol% of the recurring structural unit of Formula II
-OC-R²-CO-O-R³-O- (II),
in which R¹ is a radical of a possibly substituted bivalent aliphatic alcohol with 2 to 4 carbon atoms or a possibly substituted cycloaliphatic alcohol with 6 carbon atoms or is derived from mixtures of such alcohols or polyalkylene glycols, R² is a radical of an aliphatic dicarboxylic acid containing 1 to 10 carbon atoms, a cycloaliphatic dicarboxylic acid with 5 to 6 carbon atoms or mononuclear aromatic dicarboxylic acids or is derived from mixtures of such dicarboxylic acids, R³ assumes one of the significance defined for R¹ and the quantitative details relate to the total quantity of polymer and the copolymer has an intrinsic viscosity of 0.5 to 1.5 dl/g measured in a solution of the copolyester in dichloroacetic acid at 25°C.

16. An inlay to reinforce elastomers according to claim 15, **characterised in that** the copolymer contains 90 to 96 mol% of the recurring structural unit in Formula I and 4 to 10 mol% of the recurring structural unit Formula II.

17. An inlay to reinforce elastomers according to claim 15, **characterised in that** the dicarboxylic acid part in the recurring structural unit of Formula I is derived from 2,6-naphthalene dicarboxylic acid.

18. An inlay to reinforce elastomers according to claim 15, **characterised in that** R¹ and/or R³ are derived from 1,3-propane diol, 1,4-butane diol or particularly 1,2-ethylene glycol.

19. An inlay to reinforce elastomers according to claim 15, **characterised in that** R¹ and/or R³ are derived from 1,4-cyclohexane dimethanol.

20. An inlay to reinforce elastomers according to claim 15, **characterised in that** R² is derived from terephthalic acid and/or isophthalic acid.

21. An inlay to reinforce elastomers according to claim 15, **characterised in that** the monofilaments contain at least one further extrudable polymer preferably a fluorene-containing extrudable polymer.

22. Monofilaments with a diameter of 0.1 to 2 mm, an initial modulus at 25°C of > 12 N/tex, a unit related maximum tensile force of 30 to 70 cN/tex, a maximum tensile force elongation of 2 to 20%, a loop strength of 15 to 20 cN/tex, a modal strength of 35 to 30 cN/tex, a dry heat shrinkage at 180°C of 1 to 20%, produced from copolymers containing 85 to 99 mol% of the recurring structure formula of Formula I, and 1 to 15 mol% of the recurring structure Formula I 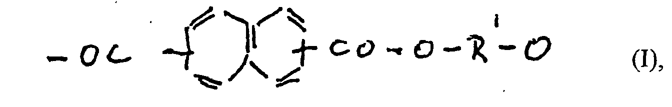 and
1 to 15 mol% of the recurring structural Formula II containing
-OC-R²-CO-O-R³-O- (II),
in which R¹ is a radical of possibly substituted bivalent aliphatic alcohol with 2 to 4 carbon atoms with 1 possibly substituted cycloaliphatic alcohol with 6 carbon atoms or is derived from mixtures of such alcohols or polyalkylene glycols, R² is a radical of an aliphatic dicarboxylic acid with 1 to 10 carbon atoms, a cycloaliphatic dicarboxylic acid with 5 to 6 carbon atoms or mononuclear aromatic dicarboxylic acids or is derived from mixtures of such dicarboxylic acids, R³ assumes a significance defined for R¹ and the quantititative details are related to the total quantity of polymer and the copolymer has an intrinsic viscosity measured in a solution of the copolymer in dichloroacetic acid at 25°C of 0.5 to 1.5 dl/g.

23. Use of the monofilaments according to claim 22 for producing paper making machines.

24. Use of the monofilaments according to claim 22 for producing filters.

25. Use of the monofilaments according to claim 22 for producing inlays for reinforcing elastomers.

26. Monofilaments with a diameter of 0.1 to 2 mm, an initial modulus at 25°C of > 12 N/tex, a unit related maximum tensile strength of 30 to 70 cN/tex, a maximum tensile strength elongation of 2 to 20%, a loop strength of 15 to 40 cN/tex, a nodal strength of 25 to 50 cN/tex, a dry heat shrinkage at 180°C of 1 to 20%, produced from copolymers which contain 85 to 99 mol% of the recurring structural formula of Formula I 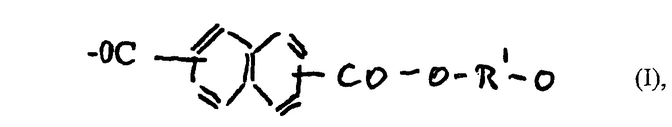 and
1 to 15 mol% of the recurring structural formula of Formula II
-OC-R²-CO-O-R³-O- (II),
in which R¹ is a radical of a possibly substituted bivalent aliphatic alcohol with 2 to 4 carbon atoms or one possibly substituted cycloaliphatic alcohols with 6 carbon atoms or is derived from mixtures of such alcohols or polyalkylene glycols, R² is a radical of an aliphatic dicarboxylic acid with 5 to 6 carbon atoms or mononuclear aromatic dicarboxylic acids or is derived from mixtures of such dicarboxylic acids, R³ assumes one of the meanings defined for R¹ and the quantitative details refer to the total quantity of the polymer and the copolymer has an intrinsic viscosity, measured in a solution of the copolyester in dichloroacetic acid at 25°C, of 0.5 to 1.5 dl/g and the terminal groups of this copolymer are stabilised by being capped with an occluding means, preferably a carbodiimide.

27. Monofilaments according to claim 26, **characterised in that** the occluding means are a mono- or a polycarbodiimide or a combination thereof.

28. Use of the monofilaments according to claim 26 or 27 for the production of paper making machines.

29. Use of the monofilaments according to claim 26 or 27 for the production of filters.

30. Use of the monifilaments according to claim 28 or 29 for producing inlays for reinforcing elastomers.

31. Use of the monofilaments according to claim 28 or 29 for the production of filters.

32. Use of the monofilaments according to claim 28 or 29 for the production of elastomers.

## Revendications (Revendications pour l'(les) Etat(s) contractant(s) suivant(s): CH, IT, LI)

1. Toile de machine à papier comportant des monofilaments en copolymères qui comportent de 85 à 99% molaires de l'unité structurale répondant à la formule I 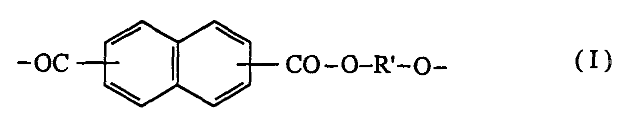 et
de 1 à 15 % molaires de l'unité structurale récurrante répondant à la formule II
-OC-R²-CO-O-R³-O- (II),
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

2. Toile de machine à papier d'après la revendication 1, **caracterisée en ce que** le copolymère comporte de 90 à 96 % molaires de l'unité structurale récurrente de la formule I et de 4 à 10 % molaires de l'unité structurale récurrente de la formule II.

3. Toile de machine à papier d'après la revendication 1, **caracterisée en ce que** la part en acide dicarboxylique de l'unité structurale récurrente de la formule I découle de l'acide 2,6-naphthalène-dicarboxylique.

4. Toile de machine à papier d'après la revendication 1, **caracterisée en ce que** R¹ et/ou R³ découlent du 1,3-diol de propane, du 1,4-diol de butane ou, en particulier, du 1,2-éthylèneglycol.

5. Toile de machine à papier d'après la revendication 1, **caracterisée en ce que** R¹ et/ou R³ découlent du 1,4-cyclohexanedimethanol.

6. Toile de machine à papier d'après la revendication 1, **caracterisée en ce que** R² découle de l'acide téréphthalique et/ou de l'acide isophthalique.

7. Toile de machine à papier d'après la revendication 1, **caracterisée en ce que** les monofilaments comportent au moins un autre polymère extrudable, de préférence un polymère extrudable fluoritique.

8. Filtre comportant des monofilaments en copolymères qui comportent de 85 à 99% molaires de l'unité structurale répondant à la formule I 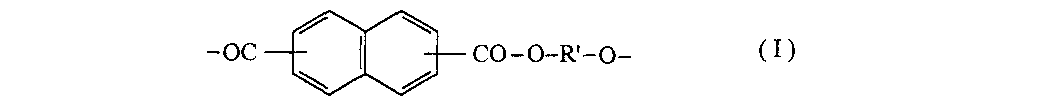 et
de 1 à 15 % molaires de l'unité structurale récurrante répondant à la formule II
-OC-R²-CO-O-R³-O- (II),
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

9. Filtre d'après la revendication 8, **caracterisé en ce que** le copolymère comporte de 90 à 96 % molaires de l'unité structurale récurrente de la formule I et de 4 à 10 % molaires de l'unité structurale récurrente de la formule II.

10. Filtre d'après la revendication 8, **caracterisé en ce que** la part en acide dicarboxylique de l'unité structurale récurrente de la formule I découle de l'acide 2,6-naphthalène-dicarboxylique.

11. Filtre d'après la revendication 8, **caracterisé en ce que** R¹ et/ou R³ découlent du 1,3-diol de propane, du 1,4-diol de butane ou, en particulier, du 1,2-éthylèneglycol.

12. Filtre d'après la revendication 8, **caracterisé en ce que** que R¹ et/ou R³ découlent du 1,4-cyclohexanedimethanol.

13. Filtre d'après la revendication 8, **caracterisé en ce que** que R² découle de l'acide téréphthalique et/ou de l'acide isophthalique.

14. Filtre d'après la revendication 8, **caracterisée en ce que** les monofilaments comportent au moins un autre polymère extrudable, de préférence un polymère extrudable fluoritique.

15. Structure de renforcement d'élastomères comportant des monofilaments en copolymères qui comportent de 85 à 99% molaires de l'unité structurale répondant à la formule I 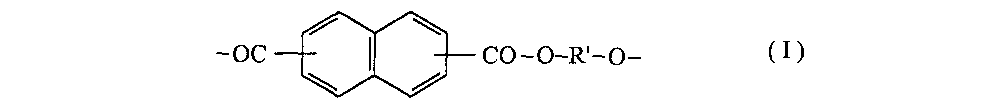 et
de 1 à 15 % molaires de l'unité structurale récurrante répondant à la formule II
-OC-R²-CO-O-R³-O- (II),
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

16. Structure de renforcement d'élastomères d'après la revendication 15, **caractérisée en ce que** le copolymère comporte de 90 à 96 % molaires de l'unité structurale récurrente de la formule I et de 4 à 10 % molaires de l'unité structurale récurrente de la formule II.

17. Structure de renforcement d'élastomères d'après la revendication 15, **caractérisée en ce que** la part en acide dicarboxylique de l'unité structurale récurrente de la formule I découle de l'acide 2,6-naphthalène-dicarboxylique.

18. Structure de renforcement d'élastomères d'après la revendication 15, **caractérisée en ce que** R¹ et/ou R³ découlent du 1,3-diol de propane, du 1,4-diol de butane ou, en particulier, du 1,2-éthylèneglycol.

19. Structure de renforcement d'élastomères d'après la revendication 15, **caractérisée en ce que** R¹ et/ou R³ découlent du 1,4-cyclohexanedimethanol.

20. Structure de renforcement d'élastomères d'après la revendication 15, **caractérisée en ce que** R² découle de l'acide téréphthalique et/ou de l'acide isophthalique.

21. Structure de renforcement d'élastomères d'après la revendication 15, **caractérisée en ce que** les monofilaments comportent au moins un autre polymère extrudable, de préférence un polymère extrudable fluoritique.

22. Copolymères comportant de 85 à 99% molaires de l'unité structurale répondant à la formule I 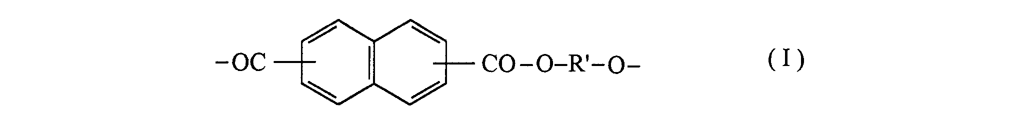 et
de 1 à 15 % molaires de l'unité structurale récurrante répondant à la formule II
-OC-R²-CO-O-R³-O- (II),
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

23. Copolymères d'après la revendication 22, **caractérisés en ce que** ceux-ci sont stabilisés par transformation avec un monocarbodiimide et/ou un polycarbodiimide, de préférence avec une combinaison d'un monocarbodiimide et d'un polycarbodiimide.

24. Monofilaments ayant un diamètre de 0,1 à 2 mm, un module initial à 25°C de > 12 N/tex, une force de traction maximale standardisée de 30 à 70 cN/tex, un allongement à la force de traction maximale de 2% à 20%, une stabilité de boucle de 15 à 40 cN/tex, une stabilité des noeuds de 25 à 50 cN/tex, un retrait à la chaleur sèche à 180°C de 1% à 20%, produits à partir de copolymères qui comportent de 85 à 99% molaires de l'unité structurale répondant à la formule I 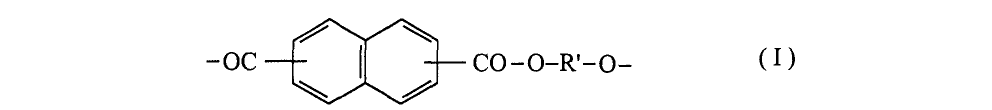 et
de 1 à 15 % molaires de l'unité structurale récurrante répondant à la formule II
-OC-R²-CO-O-R³-O- (II),
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

25. Utilisation des monofilaments d'après la revendication 24 pour la production de toiles de machine à papier.

26. Utilisation des monofilaments d'après la revendication 24 pour la production de filtres.

27. Utilisation des monofilaments d'après la revendication 24 pour la production de structures de renforcement d'élastomères.

28. Monofilaments ayant un diamètre de 0,1 à 2 mm, un module initial à 25°C de > 12 N/tex, une force de traction maximale standardisée de 30 à 70 cN/tex, un allongement à la force de traction maximale de 2% à 20%, une stabilité de boucle de 15 à 40 cN/tex, une stabilité des noeuds de 25 à 50 cN/tex, un retrait à la chaleur sèche à 180°C de 1% à 20%, produits à partir de copolymères qui comportent de 85 à 99% molaires de l'unité structurale répondant à la formule I 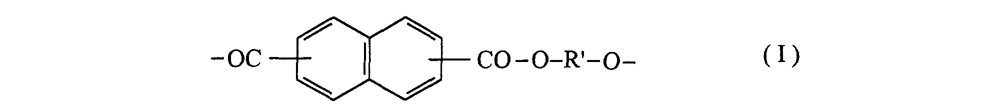 et
de 1 à 15 % molaires de l'unité structurale récurrante répondant à la formule II
-OC-R²-CO-O-R³-O- (II),
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C,
et les groupes terminaux dudit copolymère sont stabilisés par protection avec un agent de blocage, de préférence avec un carbodiimide.

29. Monofilaments d'après la revendication 28, **caractérisés en ce que** l'agent de blocage est un monocarbodiimide ou un polycarbodiimide ou une combinaison de ceux-ci.

30. Utilisation des monofilaments d'après les revendications 28 ou 29 pour la production de toiles de machine à papier.

31. Utilisation des monofilaments d'après les revendications 28 ou 29 pour la production de filtres.

32. Utilisation des monofilaments d'après les revendications 28 ou 29 pour la production de structures de renforcement d'élastomères.

## Revendications (Revendications pour l'(les) Etat(s) contractant(s) suivant(s): DE, GB)

1. Toile de machine à papier comportant des monofilaments en copolymères qui comportent de 85 à 99% molaires de l'unité structurale répondant à la formule I 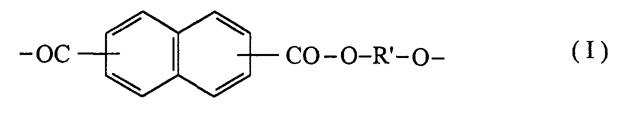 et
de 1 à 15 % molaires de l'unité structurale récurrante répondant à la formule II
-OC-R²-CO-O-R³-O- (II),
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

2. Toile de machine à papier d'après la revendication 1, **caracterisée en ce que** le copolymère comporte de 90 à 96 % molaires de l'unité structurale récurrente de la formule I et de 4 à 10 % molaires de l'unité structurale récurrente de la formule II.

3. Toile de machine à papier d'après la revendication 1, **caracterisée en ce que** la part en acide dicarboxylique de l'unité structurale récurrente de la formule I découle de l'acide 2,6-naphthalène-dicarboxylique.

4. Toile de machine à papier d'après la revendication 1, **caracterisée en ce que** R¹ et/ou R³ découlent du 1,3-diol de propane, du 1,4-diol de butane ou, en particulier, du 1,2-éthylèneglycol.

5. Toile de machine à papier d'après la revendication 1, **caracterisée en ce que** R¹ et/ou R³ découlent du 1,4-cyclohexanedimethanol.

6. Toile de machine à papier d'après la revendication 1, **caracterisée en ce que** R² découle de l'acide téréphthalique et/ou de l'acide isophthalique.

7. Toile de machine à papier d'après la revendication 1, **caracterisée en ce que** les monofilaments comportent au moins un autre polymère extrudable, de préférence un polymère extrudable fluoritique.

8. Filtre comportant des monofilaments en copolymères qui comportent de 85 à 99% molaires de l'unité structurale répondant à la formule I 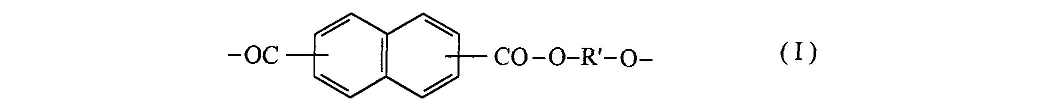 et
de 1 à 15 % molaires de l'unité structurale récurrante répondant à la formule II
-OC-R²-CO-O-R³-O- (II)
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

9. Filtre d'après la revendication 8, **caracterisé en ce que** le copolymère comporte de 90 à 96 % molaires de l'unité structurale récurrente de la formule I et de 4 à 10 % molaires de l'unité structurale récurrente de la formule II.

10. Filtre d'après la revendication 8, **caracterisé en ce que** la part en acide dicarboxylique de l'unité structurale récurrente de la formule I découle de l'acide 2,6-naphthalène-dicarboxylique.

11. Filtre d'après la revendication 8, **caracterisé en ce que** R¹ et/ou R³ découlent du 1,3-diol de propane, du 1,4-diol de butane ou, en particulier, du 1,2-éthylèneglycol.

12. Filtre d'après la revendication 8, **caracterisé en ce que** que R¹ et/ou R³ découlent du 1,4-cyclohexanedimethanol.

13. Filtre d'après la revendication 8, **caracterisé en ce que** que R² découle de l'acide téréphthalique et/ou de l'acide isophthalique.

14. Filtre d'après la revendication 8, **caracterisé en ce que** les monofilaments comportent au moins un autre polymère extrudable, de préférence un polymère extrudable fluoritique.

15. Structure de renforcement d'élastomères comportant des monofilaments en copolymères qui comportent de 85 à 99% molaires de l'unité structurale répondant à la formule I 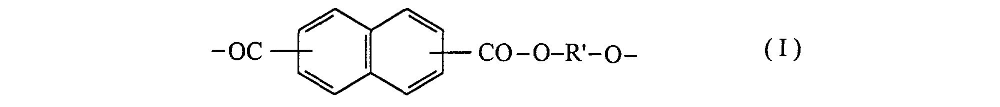 et
de 1 à 15 % molaires de l'unité structurale récurrante répondant à la formule II
-OC-R²-CO-O-R³-O- (II)
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

16. Structure de renforcement d'élastomères d'après la revendication 15, **caractérisée en ce que** le copolymère comporte de 90 à 96 % molaires de l'unité structurale récurrente de la formule I et de 4 à 10 % molaires de l'unité structurale récurrente de la formule II.

17. Structure de renforcement d'élastomères d'après la revendication 15, **caractérisée en ce que** la part en acide dicarboxylique de l'unité structurale récurrente de la formule I découle de l'acide 2,6-naphthalène-dicarboxylique.

18. Structure de renforcement d'élastomères d'après la revendication 15, **caractérisée en ce que** R¹ et/ou R³ découlent du 1,3-diol de propane, du 1,4-diol de butane ou, en particulier, du 1,2-éthylèneglycol.

19. Structure de renforcement d'élastomères d'après la revendication 15, **caractérisée en ce que** R¹ et/ou R³ découlent du 1,4-cyclohexanedimethanol.

20. Structure de renforcement d'élastomères d'après la revendication 15, **caractérisée en ce que** R² découle de l'acide téréphthalique et/ou de l'acide isophthalique.

21. Structure de renforcement d'élastomères d'après la revendication 15, **caractérisée en ce que** les monofilaments comportent au moins un autre polymère extrudable, de préférence un polymère extrudable fluoritique.

22. Monofilaments ayant un diamètre de 0,1 à 2 mm, un module initial à 25°C de > 12 N/tex, une force de traction maximale standardisée de 30 à 70 cN/tex, un allongement à la force de traction maximale de 2% à 20%, une stabilité de boucle de 15 à 40 cN/tex, une stabilité des noeuds de 25 à 50 cN/tex, un retrait à la chaleur sèche à 180°C de 1% à 20%, produits en copolymères qui comportent de 85 à 99% molaires de l'unité structurale répondant à la formule I 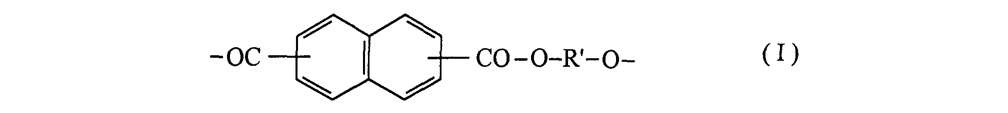 et
de 1 à 15 % molaires de l'unité structurale récurrante répondant à la formule II
-OC-R²-CO-O-R³-O- (II)
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C.

23. Utilisation des monofilaments d'après la revendication 22 pour la production de toiles de machine à papier.

24. Utilisation des monofilaments d'après la revendication 22 pour la production de filtres.

25. Utilisation des monofilaments d'après la revendication 22 pour la production de structures de renforcement d'élastomères.

26. Monofilaments ayant un diamètre de 0,1 à 2 mm, un module initial à 25°C de > 12 N/tex, une force de traction maximale standardisée de 30 à 70 cN/tex, un allongement à la force de traction maximale de 2% à 20%, une stabilité de boucle de 15 à 40 cN/tex, une stabilité des noeuds de 25 à 50 cN/tex, un retrait à la chaleur sèche à 180°C de 1% à 20%, produits en copolymères qui comportent de 85 à 99% molaires de l'unité structurale répondant à la formule I 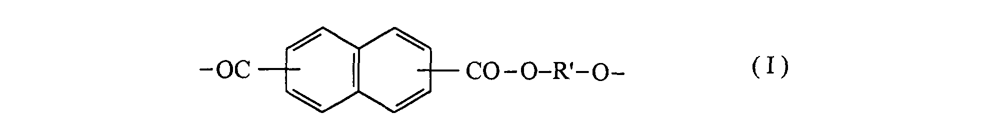 et
de 1 à 15 % molaires de l'unité structurale récurrante répondant à la formule II
-OC-R²-CO-O-R³-O- (II)
dans lesquelles R¹ représente une résidue d'un alcool bivalent aliphatique ayant de 2 à 4 atomes de carbone qui, le cas échéant, est substitué, ou d'un alcool cyclo-aliphatique ayant 6 atomes de carbone qui, le cas échéant, est substutué, ou découle de mélanges de tels alcools ou de tels polyalkyléne-glycols,
R² représente une résidue d'un acide dicarboxylique aliphatique ayant de 1 à 10 atomes de carbone, d'un acide dicarboxylique cyclo-aliphatique ayant de 5 à 6 atomes de carbone, ou d'acides dicarboxyliques bivalents aromatiques, ou découle de mélanges de tels acides dicarboxyliques,
R³ prend une des significations définies pour R¹, et les données de quantité ont rapport à la quantité totale du polymère,
et le polymère a une viscosité intrinsèque allant de 0.5 à 1.5 dl/g, mesurée dans une solution du copolyester en acide dichloracétique à une température de 25°C,
et les groupes terminaux dudit copolymère sont stabilisés par protection avec un agent de blocage, de préférence avec un carbodiimide.

27. Monofilaments d'après la revendication 26, **caractérisés en ce que** l'agent de blocage est un monocarbodiimide ou un polycarbodiimide ou une combinaison de ceux-ci.

28. Utilisation des monofilaments d'après les revendications 26 ou 27 pour la production de toiles de machine à papier.

29. Utilisation des monofilaments d'après les revendications 26 ou 27 pour la production de filtres.

30. Utilisation des monofilaments d'après les revendications 26 ou 27 pour la production de structures de renforcement d'élastomères.

31. Utilisation des monofilaments d'après les revendications 28 ou 29 pour la production de filtres.

32. Utilisation des monofilaments d'après les revendications 28 ou 29 pour la production d'élastomères.
